Europäisches Patentamt

European Patent Office

Office européen des brevets

(11) Publication number: **0 098 714**
**A2**

(12) # EUROPEAN PATENT APPLICATION

(21) Application number: **83303593.4**

(51) Int. Cl.³: **G 06 F 1/02**

(22) Date of filing: **22.06.83**

(30) Priority: **02.07.82 US 394563**

(43) Date of publication of application: **18.01.84**
**Bulletin 84/3**

(84) Designated Contracting States: **DE FR GB IT**

(71) Applicant: **THE BABCOCK & WILCOX COMPANY,**
**1010 Common Street P.O. Box 60035, New Orleans**
**Louisiana 70160 (US)**

(72) Inventor: **Keyes, Marion Alvah IV, 120 Riverstone Drive,**
**Chagrin Falls Ohio 44022 (US)**
Inventor: **Thompson, William L., 15364 Gar Highway,**
**Chardon Ohio 44024 (US)**

(74) Representative: **Cotter, Ivan John et al, D. YOUNG &**
**CO. 10 Staple Inn, London WC1V 7RD (GB)**

(54) **Function generators.**

(57) A function generator produces an output signal [f(X)] varying in predetermined non-linear relationship to an input signal (X). The input signal (X) addresses a programmable read-only memory (14) which is programmed to produce readout signals (1, 2) linearly proportional to selected values of the input signal (X) and readout signals (3, 4) corresponding to the predetermined non-linear function of the input signal at the selected values. The output signal (X) is derived by interpolation between consecutive selected input signals which bracket the input signal.

1

# FUNCTION GENERATORS

This invention relates to function generators for producing an output signal varying in predetermined non-linear relationship to an input signal.

According to the invention there is provided a function generator for producing a digital output signal varying in predetermined non-linear relationship to a digital input signal, the function generator being characterised by

a programmable read-only memory for receiving the digital input signal and programmed to generate first and second readout signals corresponding to selected minimum and maximum values of the input signal, respectively, and third and fourth readout signals corresponding to the non-linear relationship between the input and output signals at the minimum and maximum values of the input signal, respectively,

means for generating a fifth signal proportional to the difference between the input signal and the first signal,

means for generating a sixth signal proportional to the difference between the second and first signals,

means for generating a seventh signal proportional to the difference between the fourth and third signals,

means for generating an eighth signal proportional to the quotient of the sixth signal divided by the seventh signal,

means for generating a ninth signal proportional to the product of the fifth signal multiplied by the eighth signal, and

means for generating a tenth signal proportional to the sum of the third and ninth signals whereby the tenth signal varies in the non-linear relationship to the input signal.

In accordance with a preferred embodiment of this invention described in detail hereinblow, a digital input signal addresses the programmable read-out memory (PROM), which is programmed to generate digital output signals corresponding to the predetermined function derived from preselected values of the input signal and the value of the output signal is determined by interpolation between the two preselected values of this input signal which bracket the input signal. In this implementation, the required PROM programs are materially reduced over function generators wherein it is necessary to store in a PROM (such as illustrated and described in US Patent No. 3 164 807) the output signals for approximately each and every value of the input signal to obtain comparable accuracy.

The invention will now be further described, by way of illustrative and non-limiting example, with reference to the accompanying drawing, in which:

Figure 1 is a plot of non-linear curve, $f(X) = X^2$, useful in explaining the principles of operation of a function generator embodying this invention; and

Figure 2 is a block diagram of the function generator embodying this invention.

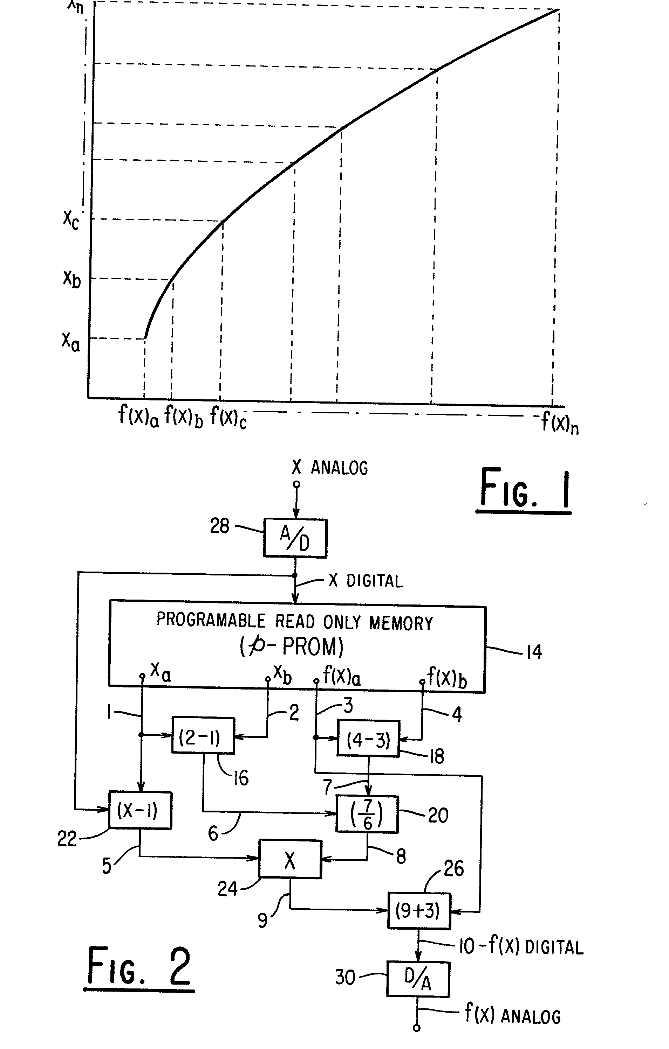

Referring now to the drawing, there is graphically shown in Figure 1 an arbitrarily chosen non-linear function between an independent input digital signal $(X)$ and the resultant dependent digital signal $f(X)$. In a function generator shown in Figure 2, selected values $X_a$, $X_b$, $X_c$ --- $X_n$ of the independent input signal and the resulting values $f(X)_a$, $f(X)_b$, $f(X)_c$ --- $f(X)_n$ of the dependent signal are programmed in a PROM 14. The number and spacing of the selected values of the independent signal can be varied in accordance with the degree of accuracy required, it being recognised that each increase in selected values of the input signal requires a corresponding increase in the memory capacity of the PROM 14.

Assume, for example, that the input signal $(X)$ has a value intermediate to the selected values $X_a$ and $X_b$. The PROM 14 would generate readout or output signals corresponding in value to $X_a$, $X_b$, $f(X)_a$ and $f(X)_b$, identified in the drawing as signals 1, 2, 3, and 4. From these signals, by means hereinafter described, an output signal corresponding to $f(X)$ is derived from the interpolating equation:

$$f(X) = f(X)_a + (X - X_a)\left[\frac{f(X)_b - f(X)_a}{X_b - X_a}\right] \qquad (1)$$

A subtraction unit 16 receives the readout signals 1 and 2 and generates an output signal 6 corresponding to the difference between $X_b$ and $X_a$. A subtraction unit 18 receives the readout signals 3 and 4 and generates an output signal 7 corresponding to the difference between $f(X)_b$ and $f(X)_a$.

A dividing unit 20 receives the readout signals 6 and 7 and generates an output signal 8 corresponding to the quotient of:

$$\left[ \frac{f(X)_b - f(X)_a}{X_b - X_a} \right] = K_1 \qquad (2)$$

As indicated, the quotient of (2) is a constant $K_1$ so long as the value of $(X)$ remains between the limits $(X)_a$ and $(X)_b$. Accordingly, if desired, the constant $K_1$ can be programmed into the PROM 14.

A subtraction unit 22 receives the signal $(X)$ and the readout signal 1, and generates an output signal 5 corresponding to the difference between $X$ and $X_a$. A multiplying unit 24 receives the signals 5 and 8 and generates an output signal 9 corresponding to the product of:

$$(X-X_a) K_1 \qquad (3)$$

A summing unit 26 receives the signals 3 and 9 and generates an output signal 10 corresponding in value to $f(X)$ within the limits $X_a$ and $X_b$.

Upon the independent input signal $(X)$ going beyond the limits $X_a$ and $X_b$, for example if it increases in value to fall between the limits $X_b$ and $X_c$, the PROM 14 would then, as programmed, generate output signals $X_b$, $X_c$, $f(X)_b$ and $f(X)_c$ in place of $X_a$, $X_b$, $f(X)_a$, $f(X)_b$. The mathematical computations to derive the output signal $f(X)_b$ within the limits $X_b$ and $X_c$ would remain as detailed above. A constant $K_2$, satisfying equation (2) could, if desired, be programmed into the PROM 14 as heretofore described for the constant $K_1$.

As will be evident to those skilled in the art, the above-described digital function generator can readily be converted to an analog function generator by the inclusion of an analog to digital converter 28 for converting an independent analog signal to the corresponding digital output signal and by the inclusion of a digital to analog converter 30 for converting the output signal $f(X)$ to a corresponding analog output signal.

CLAIMS

1.     A function generator for producing a  digital output signal varying in predetermined non-linear relationship to a digital input signal, the function generator being characterised by

a programmable read-only memory (14) for receiving the digital input signal (X) and programmed to generate first and second readout signals (1, 2) corresponding to selected minimum and maximum values (Xa, Xb) of the input signal, respectively, and third and fourth readout signals (3, 4) corresponding to the non-linear relationship between the input and output signals at the minimum and maximum values of the input signal, respectively,

means (22) for generating a fifth signal (5) proportional to the difference between the input signal (X) and the first signal (1),

means (16) for generating a sixth signal (6) proportional to the difference between the second and first signals (2, 1),

means (18) for generating a seventh signal (7) proportional to the difference between the fourth and third signals (4, 3),

means (20) for generating an eighth signal (8) proportional to the quotient of the sixth signal (6) divided by the seventh signal (7),

means (24) for generating a ninth signal (9) proportional to the product of the fifth signal (5) multiplied by the eighth signal (8), and

means (26) for generating a tenth signal (10) proportional to the sum of the third and ninth signals (3, 9) whereby the tenth signal (10) varies in the non-linear relationship to the input signal.

2.     A function generator according to claim 1, wherein the memory (14) is programmed to generate the first, second, third, and fourth readout signals (1, 2, 3, 4) at a plurality of selected values of the input signal (X), and wherein means is provided for selecting for readout the output signals generated by two consecutive selected input signals, one having a value less than the input signal and the other having a value greater than the input signal to form the said selected minimum and maximum values of the input signal.

3.     A function generator according to claim 1 or claim 2, including an analog to digital converter (28) responsive to an analog input signal to generate the digital input signal.

4.     A function generator according to claim 1, claim 2 or claim 3, including a digital to analog converter (30) responsive to the digital output signal to generate a proportional analog output signal.

0098714

1 / 1

Fig. 1

Fig. 2

X ANALOG

A/D  28

X DIGITAL

PROGRAMABLE READ ONLY MEMORY
(p-PROM)  14

$X_a$  $X_b$  $f(x)_a$  $f(x)_b$

(2-1)  16

(4-3)  18

(X-1)  22

$(\frac{7}{6})$  20

X  24

(9+3)  26

10-f(X) DIGITAL

D/A  30

f(X) ANALOG